Europäisches Patentamt

European Patent Office

Office européen des brevets

(19)

(11) Numéro de publication : **0 306 401 B1**

# (12) FASCICULE DE BREVET EUROPEEN

(45) Date de publication du fascicule du brevet :
**15.01.92 Bulletin 92/03**

(51) Int. Cl.$^5$ : **G02F 1/01**

(21) Numéro de dépôt : **88402183.3**

(22) Date de dépôt : **30.08.88**

(54) **Translateur de fréquence pour onde du domaine infra-rouge moyen.**

(30) Priorité : **01.09.87 FR 8712156**

(43) Date de publication de la demande :
**08.03.89 Bulletin 89/10**

(45) Mention de la délivrance du brevet :
**15.01.92 Bulletin 92/03**

(84) Etats contractants désignés :
**DE GB IT NL SE**

(56) Documents cités :
**EP-A- 0 100 418**
**EP-A- 0 218 555**
**JOURNAL OF SOVIET LASER RESEARCH, vol. 6, no. 4, juillet-août 1985, pages 412-416, Plenum Publishing Corp.; Y.Y. VAITKUS et al.: "Nonlinear optics of semiconductors and their use in adaptive optics"**
**J. OPT. SOC. AM. B, vol. 3, no. 2, février 1986, pages 306-313, Optical Society of America; G. PAULIAT et al.: "Dynamic beam deflection using photorefractive gratings in Bi12SiO20 crystals"**

(56) Documents cités :
**ELECTRONICS LETTERS, vol. 19, no. 6, 17 mars 1983, pages 234-235; A.L. SCHOLTZ et al.: "Infra-red homodyne receiver with acousto-optically controlled local oscillator"**
**"Optoelectronics, An Introduction", J. Wilson and J.F.B. Hawkes, Prentice Hall, Englewood Cliffs, 1983, pp 111-115**

(73) Titulaire : **THOMSON-CSF**
**51, Esplanade du Général de Gaulle**
**F-92800 Puteaux (FR)**

(72) Inventeur : **Papuchon, Michel**
**Thomson-CSF SCPI 19, avenue de Messine**
**F-75008 Paris (FR)**
Inventeur : **Pocholle, Jean-Paul**
**Thomson-CSF SCPI 19, avenue de Messine**
**F-75008 Paris (FR)**
Inventeur : **Delacourt, Dominique**
**Thomson-CSF SCPI 19, avenue de Messine**
**F-75008 Paris (FR)**

(74) Mandataire : **Sciaux, Edmond et al**
**THOMSON-CSF SCPI**
**F-92045 PARIS LA DEFENSE CEDEX 67 (FR)**

EP 0 306 401 B1

Jouve, 18, rue Saint-Denis, 75001 PARIS

## Description

L'invention concerne un translateur de fréquence pour une onde du domaine infra-rouge moyen, c'est-à dire de longueur d'onde supérieure à 3 microns. Un tel dispositif a des nombreuses applications dans les systèmes de transmission d'information par modulation de fréquence ; dans les systèmes de détection cohérente par hétérodynage, etc... Les translateurs classiques sont soit du type acousto-optique, mettant en oeuvre un interaction entre une onde optique et un réseau diffractant en mouvement dans le milieu de propagation de l'onde ; soit du type à lames biréfringentes tournantes, la rotation étant mécanique ou électro-optique.

Dans le domaine de l'infrarouge moyen, les dispositifs les plus couramment utilisés sont ceux du type acousto-optique. Un tel dispositif comporte un cristal couplé mécaniquement à un transducteur acoustique. Les vibrations produites par le transducteur se propagent dans le cristal en créant des variations locales de son indice de réfraction. La propagation de ces variations locales constitue un réseau diffractant qui se déplace à une vitesse constante. L'onde dont la fréquence est à translater est projetée à la surface du cristal où elle est diffractée en subissant une translation de fréquence par effet Doppler. Ce type de translateur a pour inconvénient le fait que l'onde diffractée a un angle d'émergence qui est fonction de la valeur de la translation de fréquence (voir, par exemple, "OPTOELECTRONICS, An Introduction", par J. WILSON et J.F.B. HAWKES, Prentrice HALL, Englewood CLIFFS, 1983, page 115). Néanmoins pour pallier cet inconvénient, il est possible d'utiliser ces translateurs de l'art connu en les associant, par exemple, par paire.

Le faisceau translaté n'est alors plus dévié mais on ne s'affranchit pas, de cette manière, d'une translation du faisceau parallèlement à lui-même ; ce qui pose de nombreux problèmes au sein des systèmes, cette translation dépendant de la variation de fréquence subie par le faisceau. De plus, l'association de ces translateurs augmente la complexité des systèmes.

Le but de l'invention est de proposer un translateur de fréquence, fonctionnant dans le domaine infrarouge moyen, qui n'ait pas ces inconvénients et qui soit facilement intégrable à un dispositif optique intégré dans un substrat semi-conducteur.

L'objet de l'invention est un translateur de fréquence comportant un réseau diffractant en mouvement, créé par photo-induction de porteurs à la surface d'un guide d'onde optique intégré dans un semi-conducteur. Les techniques connues permettent la fabrication de guides optiques intégrés relativement longs, supérieurs à 1 cm. L'interférence de deux ondes optiques, de fréquences différentes, permettent de créer, à la surface de ce guide, un réseau diffractant relativement long qui procure une bonne efficacité du translateur dans le domaine infra-rouge moyen.

Selon l'invention, un translateur de fréquence pour onde du domaine infra-rouge moyen, comportant un réseau diffractant en mouvement pour translater par effet Doppler la fréquence d'une onde appliquée sur ce réseau, est caractérisé en ce qu'il comporte :

— un guide optique dans lequel est guidée l'onde dont la fréquence est à translater, constitué de matériaux semi-conducteurs, et à la surface duquel un réseau diffractant est créé par des porteurs photo-induits par un éclairement périodique ;

— des moyens pour produire et pour faire interférer, à la surface du guide deux faisceaux d'onde ayant deux fréquences différentes, appartenant au domaine infra-rouge proche ou visible, pour produire ledit éclairement périodique en translation à la surface du guide.

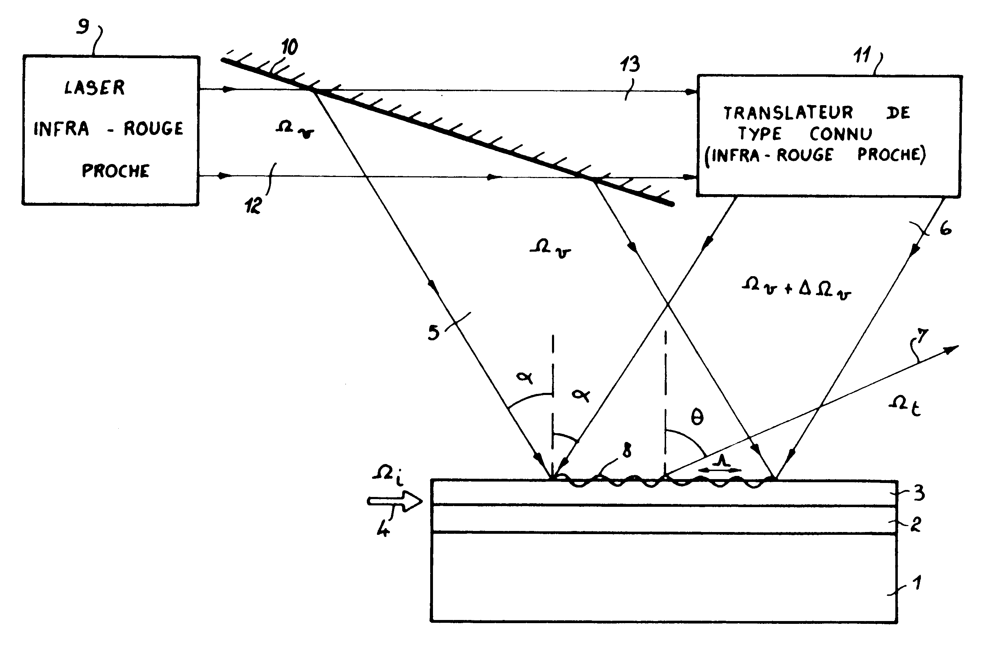

L'invention sera mieux comprise et d'autres détails apparaîtront à l'aide de la description ci-dessous d'un exemple de réalisation, et de la figure l'accompagnant. Il est connu d'utiliser un réseau diffractant gravé à la surface d'un guide optique pour coupler celui-ci au milieu extérieur. Le réseau dévie vers l'extérieur l'énergie d'une onde guidée se propageant dans le guide. Cet exemple de réalisation comporte un guide optique constitué par une couche 3 d'un premier matériau semi-conducteur et par une couche intermédiaire 2 constituée d'un second matériau semi-conducteur, déposées par épitaxie sur un substrat semi-conducteur 1.

L'onde dont la fréquence est à translater, est une onde guidée 4 qui est appliquée parallèlement aux couches 3 et 2 pour être guidée par celles-ci. Sa pulsation, $\Omega_i$, appartient au domaine infra-rouge moyen. La couche 2 est une couche tampon ayant un indice optique intermédiaire entre celui de la couche 3 et celui du substrat 1, pour mieux confiner le mode guidé. Les matériaux et les épaisseurs des couches 3 et 2 sont choisis tels que les pertes du mode guidé que l'on souhaite faire diffracter à l'extérieur du guide 3 soient les plus faibles possibles, au voisinage de la longueur d'onde de l'onde guidée. Ceci compte-tenu d'un dopage possible du substrat. Ainsi l'onde guidée 4 peut interagir sur toute la longueur du guide 3. Cette longueur peut être supérieure à un centimètre. Grâce à cette grande longueur, il est possible d'obtenir une excellente efficacité de diffraction.

Dans cet exemple de réalisation, les pertes du mode fondamental transverse électrique $TE_0$ sont inférieures à 1 dB/cm.

Une diode laser 9 fournit un faisceau lumineux cohérent 12, de fréquence $\Omega_v$ située dans le domaine infra-rouge proche. Ce faisceau 12 est séparé en deux faisceaux, 5 et 19, par une lame semi-transparente 10. Le faisceau 13 entre dans un translateur de fréquence, 11, de type connu, fonctionnant dans le domaine infra-rouge proche. Le translateur 11 restitue un faisceau 6, de pulsation $\Omega_v + \Delta\Omega_v$ fixée. La lame 10 et le translateur 11 projettent sur la surface externe de la couche 3 respectivement le faisceau lumineux 5 de pulsation $\Omega_v$ et le faisceau lumineux 6 de pulsation $\Omega_v + \Delta\Omega_v$, ces deux pulsations appartenant au domaine du proche infra-rouge.

L'interférence des faisceaux 5 et 6 à la surface de la couche 3 provoque un éclairement non uniforme dont la valeur varie périodiquement dans l'espace et dans le temps. Cet éclairement génère des variations locales de l'indice de réfraction dans la couche 3 et ces variations constituent un réseau diffractant 8 ayant un mouvement de translation à vitesse constante. Le réseau diffractant 8 dévie, vers l'extérieur du guide 3, l'énergie de l'onde 4, en modifiant sa fréquence par effet Doppler. L'onde diffractée a un angle d'émergence $\theta$ par rapport à la normale à la couche 3 et a une pulsation $\Omega_i + P \cdot \Delta\Omega_v$, où P est l'ordre de diffraction. En pratique, la majeure partie de l'énergie diffractée est contenue dans un faisceau diffracté 7 correspondant au premier rang de diffraction.

En optique intégrée, il est possible d'utiliser un translateur 11 comportant un monocristal de $LiNbO_3$ dans lequel un réseau diffractant en mouvement est produit par effet électrooptique ; ou bien d'utiliser un modulateur de phase, commandé par une rampe de tension ; ces deux types de dispositifs étant de réalisation classique dans le domaine de l'infra-rouge proche ou du visible.

Le laser fournissant les deux faisceaux 5 et 6 a une longueur d'onde du domaine proche infra-rouge ou visible, ce qui permet l'utilisation d'une diode laser à semi-conducteur.

Il est possible de démontrer que l'angle $\theta$, dans l'air, satisfait la relation suivante :

$$\sin\theta = \frac{\beta}{k} + P \cdot \frac{\lambda_i}{\Lambda} \qquad (1)$$

où $\lambda_i$ est la longueur d'onde dans le vide de l'onde 4 à translater ; $\Lambda$ est le pas du réseau 8 ; $\beta/k$ est l'indice effectif du mode de propagation dans le guide ; P est l'ordre de diffraction.

La valeur du pas du réseau 8 est déterminée par l'angle d'incidence $\alpha$ des faisceaux 5 et 6 sur la couche 3, et par la longueur d'onde $\lambda_v$ correspondant à la pulsation $\Omega_v$ du faisceau 5, conformément à la formule :

$$\Lambda = \frac{\lambda_v}{2\sin\alpha} \qquad (2)$$

La pulsation $\Omega_v$ du faisceau 5 et a pulsation $\Omega_v + \Delta\Omega_v$ du faisceau 6 sont peu différentes et appartiennent au domaine infra-rouge proche, dans cet exemple. Pour que ces faisceaux 5 et 6 puissent engendrer des photoporteurs dans les matériaux semi-conducteurs de la couche 3, ces fréquences doivent être choisies telles que l'énergie qui leur correspond soit supérieure à l'énergie de la bande interdite du matériau de la couche 3.

On démontre que le faisceau diffracté 7 a une pulsation translatée $\Omega_t$ qui est donnée par la formule suivante :

$$\Omega_t = \Omega_i + P \cdot \Delta\Omega_v \quad (3)$$

où P est l'ordre de diffraction utilisé, et où $\Delta\Omega_v$ est l'écart algébrique de pulsation entre les faisceaux 5 et 6. Il est possible de commander ainsi une translation de fréquence vers des fréquences supérieures ou vers des fréquences inférieures, avec un écart fonction de l'écart de fréquence entre les faisceaux 5 et 6.

Si le mode de propagation est le mode $TE_0$ et si l'ordre de diffraction utilisée est l'ordre $-1$, avec un angle $\theta$ fixé, l'angle $\alpha$ d'incidence des faisceaux 5 et 6 est alors déterminé selon la formule :

$$\sin\alpha = \frac{\lambda_v}{2\lambda_i}\left(\beta_o/k - \sin\theta\right) \qquad (4)$$

dans laquelle $\beta_o/k$ est l'indice effectif pour le mode de propagation $TE_o$ ; $\lambda_i$ est la longueur d'onde, dans le vide, de l'onde 4 dont la fréquence est à translater ; et $\lambda_v$ est la longueur d'onde, dans le vide, du faisceau 5 produisant les interférences.

Dans un exemple de réalisation, pour translater la fréquence d'une onde ayant pour longueur d'onde $\lambda_i =$ 10,6 µm, dans le vide, le guide optique peut être constitué par une couche 3 de $Ga_{0,47} In_{0,53}$ As avec un dopage $N^-$ inférieur à $10^{15}$ cm$^{-3}$ ; et par une couche 2 de InP avec un dopage de type $N^-$ inférieur à $10^{15}$ cm$^{-3}$. Le substrat 1 peut être constitué de InP avec un dopage de type $N^+$ égal à $2.10^{18}$ cm$^{-3}$. Les couches 3 et 2 ont chacune une épaisseur de 5 µm. Leurs indices sont respectivement $N_3 = 3,39$ et $N_2 = 3,04$. L'indice du substrat est $N_1 = 2,6$. L'indice effectif du mode de propagation $TE_0$ est égal à 3,3. La longueur d'onde des faisceaux 5 et 6 est inférieure 1,8 µm, c'est-à-dire située dans le domaine du proche infra-rouge.

Cet exemple de réalisation permet, par exemple, d'obtenir une translation relative de fréquence, de l'ordre de $\pm 10^{-2}$%, au voisinage de la longueur d'onde $\lambda_i = 10,6$ µm.

L'invention ne se limite pas à l'exemple de réalisation décrit ci-dessus, de nombreuses variantes sont à la portée de l'homme de l'art, notamment dans le choix des matériaux semi-conducteurs pour réaliser le guide optique. Dans un autre exemple de réalisation, la couche 3 peut être constituée de GaAs avec un faible dopage ; la couche 2 peut être constituée de GaAlAs, avec un faible dopage, et le substrat peut être constitué de GaAs avec un fort dopage. Les faisceaux 5 et 6 ont une longueur d'onde égale à 0,85 µm, située dans le proche infra-rouge.

Le translateur selon l'invention est applicable notamment dans le domaine de l'optique intégrée.

## Revendications

1. Translateur de fréquence pour onde du domaine infra-rouge moyen, comportant un réseau diffractant (8) en mouvement pour translater par effet Doppler la fréquence d'une onde (4) appliquée sur ce réseau (8), caractérisé en ce qu'il comporte :
— un guide optique (2, 3) dans lequel est guidée l'onde (4) dont la fréquence ($\Omega_i$) est à translater, constitué de matériaux semi-conducteurs, et à la surface duquel le réseau diffractant (8) est créé par des porteurs photo-induits par un éclairement périodique ;
— des moyens (9 à 11) pour produire et pour faire interférer, à la surface du guide (2, 3) deux faisceaux d'onde (5, 6) ayant deux fréquences différentes, appartenant au domaine infra-rouge proche ou visible, pour produire ledit éclairement périodique en translation à la surface du guide (2, 3).

2. Translateur de fréquence, selon la revendication 1, caractérisé en ce que les moyens (9 à 11) pour produire et faire interférer deux faisceaux d'onde (5, 6), comportent une diode laser à semi-conducteur (9), émettant dans le domaine infra-rouge proche ou visible ; et un translateur de fréquence (11), de type connu, fonctionnant dans le domaine infra-rouge proche ou visible.

## Patentansprüche

1. Frequenzwandler für den mittleren Infrarotbereich mit einem sich bewegenden Diffraktionsnetz (8), um mit Hilfe des Doppler-Effekts die Frequenz einer an dieses Netz (8) angelegten Welle (4) zu verschieben, dadurch gekennzeichnet, daß er
— einen Lichtwellenleiter (2, 3), in dem die Welle (4), deren Frequenz ($\Omega_i$) zu verschieben ist, geführt wird, der aus Halbleitermaterialien besteht und auf dessen Oberfläche das Diffraktionsetz (8) durch Träger erzeugt wird, die durch eine periodische Beleuchtung photoinduziert sind,
— und Mittel (9 bis 11) aufweist, um zwei Wellenbündel (5, 6) mit unterschiedlichen Frequenzen im nahen Infarot- oder im sichtbaren Bereich zu erzeugen und um sie auf der Oberfläche des Wellenleiters (2, 3) zur Interferenz zu bringen, um die periodische über die Oberfläche des Wellenleiters (2, 3) fortschreitende Beleuchtung zu erzeugen.

2. Frequenzwandler nach Anspruch 1, dadurch gekennzeichnet, daß die Mittel (9 bis 11), um zwei Wellenbündel (5, 6) zu erzeugen und zur Interferenz zu bringen, eine Halbleiter-Laserdiode (9), die im nahen Infrarot- oder sichtbaren Bereich Licht ausstrahlt, und einen Frequenzwandler (11) bekannter Bauart aufweisen, der im nahen Infrarot- oder im sichtbaren Bereich betrieben wird.

## Claims

1. A frequency shifter for a wave of the mid-infrared range, comprising a moving diffraction grating (8) intended to shift the frequency of a wave (4) applied to this grating (8) due to the Doppler effect, characterized in that it comprises :

— an optical guide (2, 3) in which the wave (4) is guided whose frequency ($\Omega_i$) is to be shifted, the guide being constituted of semiconductor materials and the diffraction grating (8) being created on its surface by light induced carriers obtained by a periodic illumination,

— means (9 to 11) for producing and for making interfere at the surface of the guide (2, 3) two wave beams (5, 6) having two different frequencies and belonging to the near infrared or visible frequency range, in order to produce said periodic illumination in translational movement on the surface of the guide (2, 3).

2. A frequency shifter according to claim 1, characterized in that the means (9 to 11) for producing and making interfere two wave beams (5, 6) comprise a semiconductor laser diode (9) which emits in the near infrared or in the visible frequency range, and a conventional frequency shifter (11), which operates in the near infrared or visible frequency range.